# FASCICULE DE BREVET EUROPEEN

(11) **EP 3 519 299 B1**
(45) Date de publication et mention de la délivrance du brevet: **22.07.2020**
(21) Numéro de dépôt: 17783939.6
(22) Date de dépôt: 26.09.2017
(51) Int. Cl.: B64D 15/12, B64D 13/02, B64D 13/06

(54) **RÉSEAU ÉLECTRIQUE ET PROCÉDÉ DE DISTRIBUTION D'ÉNERGIE ÉLECTRIQUE À ALIMENTATION PARTAGÉE À BORD D'UN AÉRONEF**
ELEKTRISCHES NETZWERK UND VERFAHREN ZUR VERTEILUNG VON ELEKTRISCHER ENERGIE FÜR EINE GEMEINSAME STROMVERSORGUNG AN BORD EINES FLUGZEUGS
ELECTRICAL NETWORK AND METHOD FOR DISTRIBUTING ELECTRICAL ENERGY FOR A SHARED POWER SUPPLY ON BOARD AN AIRCRAFT

(30) Priorité: 27.09.2016 FR 1659138
(43) Date de publication de la demande: 07.08.2019
(73) Titulaire: Liebherr-Aerospace Toulouse SAS, 31200 Toulouse (FR)
(72) Inventeur: MARQUE ÉPOUSE FABRE, Isabelle, 31620 Bouloc (FR); BRAS, Bernard, 31780 Castelgisnest (FR); DOUAT ÉPOUSE PRINCE, Karine, 31770 Colomiers (FR); GALZIN, Guillaume, 31200 Toulouse (FR)
(74) Mandataire: Cabinet BARRE LAFORGUE & associés
(86) Numéro de dépôt international: PCT/FR2017/052575
(87) Numéro de publication internationale: WO 2018/060579

(56) Documents cités:
- WO-A1-2009/068265
- WO-A1-2011/154645
- WO-A2-2004/037641
- US-A- 4 895 322
- US-A- 6 027 075
- US-A1- 2014 367 522
- US-B1- 6 427 946
- US-B2- 8 564 238

## Description

L'invention concerne un réseau électrique et un procédé de distribution d'énergie électrique d'un aéronef permettant l'alimentation électrique d'au moins un moteur électrique d'entraînement d'un compresseur d'un dispositif de gestion thermique, et d'au moins un dispositif électrique de protection d'une surface extérieure de l'aéronef contre le givre. Elle s'étend à un aéronef comprenant un réseau électrique selon l'invention et/ou dans lequel un procédé selon l'invention est mis en œuvre. Des exemples et des mises en œuvre possibles de l'art antérieur peuvent être trouvés dans le document WO2004/037641A2.

Les équipements embarqués à bord d'aéronefs modernes sont de plus en plus souvent alimentés en énergie sous forme électrique, afin d'éviter de prélever de la puissance pneumatique sur les étages de compresseur des moteurs principaux d'aéronef, au détriment de leurs performances et de leur consommation spécifique.

En particulier, les dispositifs de gestion thermique embarqués à bord des aéronefs (comprenant notamment les systèmes de conditionnement d'air permettant de refroidir ou de réchauffer l'air d'au moins une zone de l'aéronef telle qu'une cabine pour des pilotes de l'aéronef, une cabine pour des passagers de l'aéronef, une soute à bagages, ou autre ; et les dispositifs de refroidissement des équipements embarqués tels que les équipements électriques et/ou électroniques et/ou informatiques) comprennent des compresseurs qui peuvent être entraînés en rotation par un moteur électrique. Certains aéronefs comprennent par exemple un système électrique de gestion thermique alimenté uniquement par de l'énergie électrique (pour l'activation des moteurs électriques des compresseurs des boucles fluide de ce système électrique de gestion thermique), et non en particulier par de l'air sous pression prélevé sur des étages de compresseur des moteurs principaux de l'aéronef. Ce système électrique de gestion thermique comprend en particulier un système de conditionnement d'air (dénommé « EECS ») à moteurs électriques d'entraînement de compresseurs de boucles de fluide caloporteur permettant de refroidir ou de réchauffer l'air de la cabine, et des dispositifs de refroidissement à moteurs électriques d'entraînement de compresseurs de boucles de fluide caloporteur permettant de gérer thermiquement différents équipements embarqués tels que des équipements électriques et/ou électroniques et/ou informatiques, en les refroidissant.

Un dispositif de gestion thermique d'un aéronef connu comporte généralement plusieurs ensembles (souvent dénommés « packs ») de refroidissement à boucle, dite boucle fluide, de circulation d'un fluide caloporteur (cycle à air monophasique ou cycle, dit cycle vapeur, d'un fluide caloporteur diphasique), chaque boucle fluide comprenant au moins un compresseur. Dans les aéronefs modernes, au moins un dispositif de gestion thermique comprend au moins un moteur électrique d'entraînement en rotation d'un tel compresseur d'une boucle fluide, chaque moteur électrique étant alimenté en énergie électrique et piloté en vitesse par un circuit d'alimentation électrique à puissance variable alimentant exclusivement ce moteur électrique selon une puissance d'alimentation variable déterminée par une logique de commande.

Par ailleurs, les aéronefs doivent être équipés de dispositifs de protection des surfaces extérieures de l'aéronef (voilure, gouvernes, hélices,...) contre le givre. De tels dispositifs de protection contre le givre peuvent être des dispositifs conçus pour prévenir l'apparition de givre sur certaines parties des surfaces extérieures de l'aéronef et/ou des dispositifs pour supprimer le givre s'accumulant éventuellement sur ces surfaces extérieures. Là encore, les aéronefs modernes comportent souvent au moins un tel dispositif de protection contre le givre, dit dispositif électrique de protection contre le givre, alimenté uniquement par de l'énergie électrique, et non à partir d'air prélevé sur les étages de compresseur des moteurs principaux de l'aéronef. Un tel dispositif électrique de protection contre le givre peut être de différentes natures : à impulsions magnétiques (US 4895322) ; électro thermique, c'est-à-dire comprenant des tapis de chauffage par exemple par effet Joule ; à impulsions électriques (US 6427946, US 6027075) ou autre. Il est en général alimenté en tout ou rien en fonction des besoins de protection contre le givre, et nécessite à cet effet un circuit d'alimentation électrique propre, c'est-à-dire un circuit d'alimentation électrique uniquement dédié à l'alimentation électrique de ce dispositif électrique de protection contre le givre. En particulier, le système décrit dans US 2014/0367522 comprend des commutateurs à état solide qui ne permettent pas une régulation fine de la puissance électrique délivrée aux tapis chauffants, et peuvent induire une surconsommation en puissance électrique par rapport au réel besoin. En outre, un tel système qui comprend une carte de contrôle pour chaque tapis de chauffage, par exemple vingt-quatre cartes de contrôle, présente un nombre élevé de composants, induit une masse embarquée importante de l'électronique de puissance, inutilisée dans la très grande majorité des vols de l'appareil mais induisant une surconsommation de carburant, augmente la complexité des systèmes embarqués à bord de l'appareil, leurs masses, leurs coûts à l'achat et en exploitation, et diminue leur fiabilité, donc accroît les coûts de maintenance. De plus, les dispositifs électriques de protection contre le givre ne sont utilisés que sur une faible durée lors du vol de l'aéronef par rapport à la durée totale du vol. En particulier, les dispositifs électriques de protection contre le givre sont généralement utilisés seulement lors de la montée et de la descente de l'aéronef dans l'atmosphère.

Dans ce contexte, l'invention vise à pallier ces inconvénients et à perfectionner l'alimentation électrique des moteurs électriques d'entraînement des compresseurs des dispositifs de gestion thermique et des dispositifs électriques de protection contre le givre embarqués à bord d'un aéronef.

L'invention vise donc en particulier à réduire la masse embarquée et l'encombrement nécessaires à l'alimentation électrique de ces équipements, à augmenter leur fiabilité, à réduire leurs coûts.

L'invention vise également à réduire la consommation de carburant de l'aéronef induite par le réseau électrique et le procédé de distribution d'énergie électrique à ces équipements.

L'invention vise également à proposer un aéronef présentant les mêmes avantages.

Pour ce faire, l'invention concerne un réseau électrique d'aéronef comprenant :
- au moins un dispositif de génération d'un courant électrique, dit courant électrique de puissance,
- au moins un circuit d'alimentation électrique à puissance variable :
   ∘ adapté pour être relié à un moteur électrique, dit moteur de compresseur, d'entraînement d'un compresseur d'un dispositif de gestion thermique,
   ∘ agencé pour pouvoir recevoir un courant électrique de puissance et délivrer un courant électrique d'alimentation dudit moteur de compresseur selon une puissance d'alimentation variable déterminée par une logique de commande,
- au moins un dispositif électrique, dit dispositif électrique de protection contre le givre, de protection d'une surface extérieure de l'aéronef contre le givre, caractérisé en ce que :
- ledit au moins un -notamment chaque- dispositif électrique de protection contre le givre est adapté pour pouvoir être alimenté électriquement par un courant électrique d'alimentation délivré par au moins un desdits circuit d'alimentation électrique à puissance variable, dit alimentation électrique partagée, d'un moteur de compresseur,
- ladite au moins une -notamment chaque- alimentation électrique partagée est adaptée pour être reliée audit moteur de compresseur par l'intermédiaire d'un dispositif de commutation auquel est également relié ledit au moins un dispositif électrique de protection contre le givre,
- une unité de commande dudit dispositif de commutation est programmée pour, si des critères d'altitude de l'aéronef sont satisfaits, placer ledit dispositif de commutation dans un état, dit deuxième état, dans lequel l'alimentation électrique partagée est électriquement connectée audit au moins un dispositif électrique de protection contre le givre relié à ce dispositif de commutation, l'alimentation électrique partagée pouvant alors fournir un courant électrique d'alimentation à ce dispositif électrique de protection contre le givre.

Ainsi, dans ledit deuxième état (c'est-à-dire si lesdits critères d'altitude de l'aéronef sont satisfaits) et de préférence si des critères représentatifs de conditions de givrage sur ladite surface extérieure de l'aéronef sont également satisfaits, chaque dispositif électrique de protection contre le givre relié au dispositif de commutation est alimenté électriquement par un courant électrique d'alimentation délivré par l'alimentation électrique partagée.

En outre, dans ledit deuxième état, le dispositif de commutation et l'unité de commande peuvent être adaptés pour éventuellement maintenir une connexion électrique entre l'alimentation électrique partagée et ledit moteur de compresseur, si une partie de la puissance électrique fournie par l'alimentation électrique partagée est disponible pour ce moteur de compresseur. Néanmoins, dans certains modes de réalisation préférentiels de l'invention, le dispositif de commutation est adapté pour, dans ledit deuxième état, déconnecter électriquement l'alimentation électrique partagée dudit moteur de compresseur.

Les inventeurs ont en effet constaté avec surprise que les besoins en énergie électrique d'une part des dispositifs électriques de gestion thermique de l'aéronef, d'autre part des dispositifs électriques de protection contre le givre d'un aéronef sont suffisamment complémentaires lors des différentes altitudes de vol de l'aéronef, quelles que soient les conditions météorologiques, pour permettre une mutualisation au moins partielle des alimentations électriques de ces différentes charges électriques.

En particulier, lorsqu'un aéronef évolue, lors de son vol, dans un environnement rencontrant des conditions de givrage potentiel, par exemple lors des phases de montée et de descente de l'aéronef dans l'atmosphère, les besoins en énergie électrique des dispositifs de gestion thermique de l'aéronef sont en fait réduits par rapport aux autres phases de vol. Les inventeurs ont aussi déterminé que l'énergie électrique produite par le circuit d'alimentation électrique à puissance variable non consommée par les moteurs de compresseurs des dispositifs de gestion thermique peut être utilisée pour alimenter au moins un dispositif électrique de protection contre le givre, à condition d'adapter ce dispositif électrique de protection contre le givre à cet effet, c'est-à-dire au courant électrique délivré par ce circuit d'alimentation électrique à puissance variable. Les inventeurs ont ainsi démontré qu'il était possible et avantageux d'alimenter au moins un moteur de compresseur et au moins un dispositif électrique de protection contre le givre d'un aéronef à partir d'un même circuit d'alimentation électrique à puissance variable.

Un réseau électrique selon l'invention permet donc de limiter, voire d'éviter, l'utilisation d'un circuit d'alimentation électrique propre à l'alimentation d'au moins un dispositif électrique de protection contre le givre. Un tel réseau électrique permet ainsi d'alléger l'aéronef et d'en réduire les coûts de fabrication et de fonctionnement.

Différentes variantes de réalisation sont envisageables pour adapter un dispositif électrique de protection contre le givre à un courant électrique d'alimentation délivré par un circuit d'alimentation électrique à puissance variable d'un moteur de compresseur. En particulier, dans certains modes de réalisation avantageux et selon l'invention, chaque dispositif électrique de protection contre le givre relié à une alimentation électrique partagée est adapté pour pouvoir être alimenté par une puissance électrique correspondant à une puissance électrique maximum du courant électrique d'alimentation dudit moteur de compresseur délivré par cette alimentation électrique partagée. Ainsi, si un tel dispositif électrique de protection contre le givre peut recevoir la puissance électrique maximum du courant électrique d'alimentation dudit moteur de compresseur, il pourra être alimenté sans difficulté par l'alimentation électrique partagée correspondante.

L'invention s'applique à tout type d'alimentation électrique partagée, et en particulier aussi bien au cas d'une alimentation électrique partagée monophasée qu'au cas d'une alimentation électrique partagée triphasée. Ainsi, dans certains modes de réalisation selon l'invention, au moins une alimentation électrique partagée étant une alimentation électrique triphasée délivrant un courant électrique triphasé d'alimentation dudit moteur de compresseur, ledit dispositif de commutation est adapté pour, sur commande de ladite unité de commande dans ledit deuxième état (c'est-à-dire si lesdits critères d'altitude de l'aéronef sont satisfaits), connecter électriquement une phase du courant électrique triphasé délivré par l'alimentation électrique partagée à un dispositif électrique de protection contre le givre. Cela permet en particulier d'alimenter trois dispositifs électriques de protection contre le givre à partir d'une unique alimentation électrique partagée. Dans ces modes de réalisation, pour réaliser l'adaptation de chaque dispositif électrique de protection contre le givre relié à cette alimentation électrique partagée, on peut en particulier prévoir que chaque dispositif électrique de protection contre le givre relié à cette alimentation électrique partagée soit adapté pour pouvoir être alimenté par une puissance électrique égale à la puissance électrique maximum de ladite phase du courant électrique triphasé, c'est-à-dire au tiers de ladite puissance électrique maximum du courant électrique triphasé d'alimentation dudit moteur de compresseur délivrée par l'alimentation électrique partagée.

Par ailleurs, dans certains modes de réalisation avantageux de l'invention ladite unité de commande est programmée pour placer ledit dispositif de commutation :
- dans un premier état dans lequel l'alimentation électrique partagée est électriquement connectée audit moteur de compresseur de façon à pouvoir lui fournir un courant électrique d'alimentation si des premiers critères d'altitude sont satisfaits,
- dans ledit deuxième état (dans lequel l'alimentation électrique partagée est électriquement connectée à au moins un dispositif électrique de protection contre le givre relié à ce dispositif de commutation) si des deuxièmes critères d'altitude, différents desdits premiers critères d'altitude, sont satisfaits.

Dans ledit premier état, l'unité de commande et le dispositif de commutation peuvent être adaptés pour éventuellement maintenir une connexion électrique entre l'alimentation électrique partagée et au moins un dispositif électrique de protection contre le givre. Néanmoins, dans certains modes de réalisation avantageux de l'invention le dispositif de commutation est adapté pour, dans ledit premier état, déconnecter électriquement l'alimentation électrique partagée de tout dispositif électrique de protection contre le givre relié à ce dispositif de commutation. Ainsi, dans le premier état, l'alimentation électrique partagée fournit de la puissance électrique uniquement au moteur de compresseur.

Par ailleurs, l'invention s'applique à tout type de dispositif électrique de protection contre le givre, et en particulier aussi bien aux dispositifs conçus pour prévenir l'apparition de givre sur une partie de surface extérieure de l'aéronef qu'aux dispositifs conçus pour supprimer le givre s'accumulant éventuellement sur une telle partie de surface extérieure. En particulier, au moins un dispositif électrique de protection contre le givre relié à une alimentation électrique partagée par un dispositif de commutation d'un réseau électrique selon l'invention peut être choisi dans le groupe constitué des dispositifs électriques de protection contre le givre à impulsions magnétiques, des dispositifs électriques de protection contre le givre électro thermiques, des dispositifs électriques de protection contre le givre à impulsions électriques et de leurs combinaisons.

Plus particulièrement dans certains modes de réalisation conformes à l'invention au moins un -notamment chaque- dispositif électrique de protection contre le givre relié à une alimentation électrique partagée par un dispositif de commutation d'un réseau électrique selon l'invention est un dispositif de chauffage surfacique par effet Joule de ladite surface extérieure, c'est-à-dire un dispositif électrique de protection contre le givre électro thermique. De préférence, au moins un -notamment chaque- dispositif électrique de protection contre le givre est formé d'un tapis résistif dimensionné pour être alimenté par un courant électrique d'alimentation -notamment par une phase- délivré par l'alimentation électrique partagée.

Rien n'empêche dans certains modes de réalisation de prévoir qu'au moins un dispositif électrique de protection contre le givre relié à une alimentation électrique partagée par un dispositif de commutation puisse être alimenté en énergie électrique non seulement par cette alimentation électrique partagée, mais éventuellement par un autre circuit d'alimentation électrique de l'aéronef. De la sorte, un tel dispositif électrique de protection contre le givre peut être alimenté électriquement tantôt par une alimentation électrique partagée lorsque de la puissance électrique est disponible à partir de cette dernière, tantôt par un autre circuit d'alimentation électrique lorsque la puissance électrique d'alimentation électrique partagée n'est pas disponible.

Néanmoins, les inventeurs ont constaté avec surprise qu'il est possible en réalité de s'affranchir de tout circuit d'alimentation électrique propre de chaque dispositif électrique de protection contre le givre de l'aéronef. En conséquence, avantageusement dans un réseau électrique selon l'invention, le seul circuit d'alimentation électrique de chaque dispositif électrique de protection contre le givre est une alimentation électrique partagée. Ainsi, chaque dispositif électrique de protection contre le givre est relié uniquement à une alimentation électrique partagée par un dispositif de commutation, à l'exclusion de tout autre circuit d'alimentation électrique, de façon à être alimenté en énergie électrique exclusivement par une telle alimentation électrique partagée. Ainsi, aucun autre circuit d'alimentation électrique n'est à prévoir pour l'alimentation électrique des différents dispositifs électriques de protection contre le givre de l'aéronef.

Dans certaines variantes possibles d'un réseau électrique selon l'invention, rien n'empêche de prévoir, si nécessaire, qu'un circuit d'adaptation soit interposé entre une alimentation électrique partagée et au moins un dispositif électrique de protection contre le givre relié à cette alimentation électrique partagée, de façon à permettre l'alimentation électrique de ce dispositif électrique de protection contre le givre par cette alimentation électrique partagée.

Dans certains modes de réalisation d'un réseau électrique selon l'invention, au moins une même alimentation électrique partagée peut être reliée par l'intermédiaire dudit dispositif de commutation à plusieurs dispositifs électriques de protection contre le givre distincts, en série ou en parallèle, pour l'alimentation électrique simultanée ou alternative de ces différents dispositifs électriques de protection contre le givre. Par exemple, dans le cas d'une alimentation électrique partagée triphasée, différentes phases du courant électrique triphasé délivré par cette alimentation électrique partagée peuvent être utilisées pour alimenter respectivement différents dispositifs électriques de protection contre le givre.

Cela étant, dans certains modes de réalisation d'un réseau électrique selon l'invention, chaque alimentation électrique partagée est reliée par l'intermédiaire dudit dispositif de commutation à un unique dispositif électrique de protection contre le givre.

Dans un réseau électrique selon l'invention, chaque dispositif de commutation permet en particulier d'alimenter électriquement sélectivement à partir d'une même alimentation électrique partagée un moteur de compresseur d'un dispositif de gestion thermique et au moins un dispositif électrique de protection contre le givre, et ce en fonction au moins de critères prédéterminés de l'altitude de l'aéronef.

Dans un réseau électrique selon l'invention, chaque dispositif de commutation peut être placé alternativement au moins dans ledit premier état et au moins dans ledit deuxième état. Rien n'empêche de prévoir d'autres états du dispositif de commutation, par exemple un autre état dans lequel l'alimentation électrique partagée n'est plus reliée à aucun moteur de compresseur ni à aucun dispositif électrique de protection contre le givre et/ou un autre état dans lequel l'alimentation électrique partagée est reliée à un autre dispositif électrique de protection contre le givre ou à un nombre différent de dispositifs électriques de protection contre le givre et/ou un autre état dans lequel l'alimentation électrique partagée est reliée à ou moins un autre équipement d'aéronef pour l'alimentation électrique de cet autre équipement.

Cela étant, dans certains modes de réalisation avantageux d'un réseau électrique selon l'invention, au moins un -notamment chaque- dispositif de commutation est adapté pour pouvoir être placé uniquement dans ledit premier état et dans ledit deuxième état, alternativement.

L'unité de commande du dispositif de commutation permet ainsi de sélectionner chaque dispositif devant être alimenté par l'alimentation électrique partagée. L'unité de commande du dispositif de commutation permet donc de sélectionner l'alimentation électrique dudit moteur de compresseur ou bien l'alimentation électrique d'au moins un dispositif électrique de protection contre le givre.

Par ailleurs, comme indiqué ci-dessus, chaque circuit d'alimentation électrique à puissance variable délivre un courant électrique d'alimentation dudit moteur de compresseur selon une puissance d'alimentation déterminée par une logique de commande. Avantageusement et selon l'invention, au moins une telle logique de commande associée à une alimentation électrique partagée est aussi adaptée pour déterminer et ajuster une valeur de la puissance du courant électrique d'alimentation délivré à chaque dispositif électrique de protection contre le givre. Une telle logique de commande peut également être adaptée pour commander au moins un dispositif de commutation d'une alimentation électrique partagée, et donc être formée par ladite unité de commande d'un tel dispositif de commutation. En variante, la logique de commande peut être formée d'une unité distincte.

La fourniture du courant électrique d'alimentation à chaque dispositif électrique de protection contre le givre relié au dispositif de commutation peut résulter uniquement du fait que le dispositif de commutation est placé dans ledit deuxième état, lesdits deuxièmes critères d'altitude de l'aéronef étant satisfaits. Néanmoins, dans certains modes de réalisation préférentiels, cette fourniture du courant électrique d'alimentation à chaque dispositif électrique de protection contre le givre suppose d'une part que le dispositif de commutation soit dans ledit deuxième état, et, d'autre part, que des critères représentatifs de conditions de givrage sont également satisfaits. Le fait que de tels critères représentatifs de conditions de givrage soient ou non satisfaits peut être déterminé par au moins un capteur associé à ladite surface extérieure de l'aéronef.

Également, la puissance d'alimentation du courant électrique d'alimentation délivré à chaque dispositif électrique de protection contre le givre peut être déterminée par la logique de commande en fonction de données représentatives d'un risque de givrage et/ou d'une quantité de givre. Ces données peuvent être délivrées par au moins un capteur placé sur ladite surface extérieure de l'aéronef. De telles données peuvent être notamment choisies parmi des données délivrées par au moins un capteur mécanique de givrage, et des données de température délivrées par au moins un capteur de température, notamment un capteur de température de ladite surface extérieure de l'aéronef.

Dans certains modes de réalisation d'un réseau selon l'invention au moins un -notamment chaque- dispositif électrique de protection contre le givre comprend au moins un capteur de température de ladite surface extérieure de l'aéronef, et ladite unité de commande est adaptée pour recevoir des signaux de mesure de température délivrés par chaque capteur de température et pour délivrer un courant électrique d'alimentation du dispositif électrique de protection contre le givre associé à ladite surface extérieure de façon à réaliser un asservissement en température de ladite surface extérieure de l'aéronef. Cet asservissement en température peut être adapté en particulier pour délivrer une puissance d'alimentation de consigne à chaque dispositif électrique de protection contre le givre. Un asservissement de la puissance d'alimentation électrique de chaque dispositif électrique de protection contre le givre peut également être prévu à partir de ladite puissance d'alimentation de consigne pour réaliser une alimentation électrique du dispositif électrique de protection contre le givre asservie en puissance.

Dans certains modes de réalisation avantageux d'un réseau selon l'invention, chaque circuit d'alimentation électrique à puissance variable d'un moteur de compresseur d'un dispositif de gestion thermique comprend un onduleur adapté pour recevoir un courant continu de puissance et pour délivrer un courant électrique d'alimentation selon une puissance variable déterminée par ladite logique de commande. Ainsi, avantageusement, dans un réseau selon l'invention, au moins un -notamment chaque- dispositif de génération d'un courant électrique de puissance est adapté pour délivrer ce courant électrique de puissance sous forme d'un courant continu, dit courant continu de puissance. En outre, au moins une -notamment chaque- alimentation électrique partagée d'un réseau selon l'invention comprend un onduleur adapté pour recevoir le courant continu de puissance délivré par un dispositif de génération d'un courant électrique de puissance. Chaque onduleur est adapté pour délivrer un courant électrique d'alimentation sous forme d'un courant alternatif -notamment un courant alternatif triphasé- permettant d'alimenter électriquement un moteur de compresseur, et d'alimenter électriquement un dispositif électrique de protection contre le givre, notamment de produire un chauffage par effet Joule. En outre, chaque onduleur est adapté pour délivrer un courant électrique d'alimentation selon une puissance variable déterminée par ladite logique de commande.

En particulier, chaque onduleur est adapté pour recevoir un courant électrique de puissance et délivrer un courant électrique d'alimentation selon une puissance d'alimentation variable déterminée par ladite logique de commande. Chaque dispositif de commutation est placé en sortie d'un onduleur et relié électriquement à un bobinage dudit moteur de compresseur et à au moins un dispositif de protection contre le givre.

Dans certains modes de réalisation d'un réseau selon l'invention, au moins un moteur de compresseur est un moteur électrique à deux bobinages (notamment tel que décrit par US 8564238) et est relié à deux circuits d'alimentation électrique à puissance variable -notamment à deux onduleurs- dont au moins une alimentation électrique partagée, chacun de ces deux circuits d'alimentation électrique à puissance variable étant relié (par l'intermédiaire d'un dispositif de commutation correspondant) à l'un des deux bobinages du moteur de compresseur, respectivement.

En variante ou en combinaison, dans certains modes de réalisation d'un réseau selon l'invention, au moins un dispositif électrique de protection contre le givre est relié à une pluralité de -notamment à deux- dispositifs de commutation d'une pluralité d'alimentations électriques partagées distinctes -notamment deux alimentations électriques partagées- de façon à pouvoir recevoir sélectivement la puissance électrique délivrée par chaque alimentation électrique partagée, alternativement ou en combinaison. En particulier, dans certains modes de réalisation un réseau selon l'invention est adapté pour alimenter alternativement deux moteurs de compresseur de deux dispositifs de gestion thermique distincts reliés à deux alimentations électriques partagées distinctes, tout en maintenant l'alimentation d'un même dispositif électrique de protection contre le givre en l'alimentant alternativement par ces deux alimentations électriques partagées.

En outre, dans certains modes de réalisation selon l'invention, le réseau électrique comprend plusieurs circuits d'alimentation électrique à puissance variable de moteurs de compresseur de dispositifs de gestion thermique, et en particulier plusieurs alimentations électriques partagées. Ainsi, un réseau selon l'invention peut être adapté pour fournir de l'énergie électrique à plusieurs moteurs de compresseur de différents dispositifs de gestion thermique.

Dans certains modes de réalisation d'un réseau selon l'invention au moins un circuit d'alimentation électrique à puissance variable est relié uniquement à un moteur de compresseur, c'est-à-dire ne peut pas être relié à un dispositif électrique de protection contre le givre, n'est pas relié à un dispositif de commutation selon l'invention et ne constitue pas une alimentation électrique partagée. Ainsi, un réseau selon l'invention comprend au moins un circuit d'alimentation électrique non partagée à puissance variable d'un moteur de compresseur -notamment d'un moteur de compresseur d'un système de conditionnement d'air- exclusivement relié à ce moteur de compresseur, qui est donc alimenté électriquement quelle que soit l'altitude de l'aéronef et les conditions de givrage.

L'invention s'étend également à un procédé de distribution électrique mis en œuvre par un réseau électrique selon l'invention.

Elle s'étend ainsi à un procédé de distribution électrique à bord d'un aéronef à partir d'au moins un dispositif de génération d'un courant électrique, dit courant électrique de puissance, procédé dans lequel :
- au moins un circuit d'alimentation électrique à puissance variable :
   o étant adapté pour être relié à un moteur électrique, dit moteur de compresseur, d'entraînement d'un compresseur d'un dispositif de gestion thermique,
   o reçoit un courant électrique de puissance et délivre un courant électrique d'alimentation dudit moteur de compresseur selon une puissance d'alimentation variable déterminée par une logique de commande,
- un courant électrique est fourni à au moins un dispositif électrique, dit dispositif électrique de protection contre le givre, de protection d'une surface extérieure de l'aéronef contre le givre,
caractérisé en ce que :
- ledit au moins un -notamment chaque- dispositif électrique de protection contre le givre est adapté pour pouvoir être alimenté électriquement par un courant électrique d'alimentation délivré par au moins un desdits circuit d'alimentation électrique à puissance variable, dit alimentation électrique partagée, d'un moteur de compresseur d'un dispositif de gestion thermique,
- ladite au moins une alimentation électrique partagée est reliée audit moteur de compresseur par l'intermédiaire d'un dispositif de commutation auquel est également relié ledit au moins un dispositif électrique de protection contre le givre,
- si des critères d'altitude de l'aéronef sont satisfaits ledit dispositif de commutation est placé dans un état, dit deuxième état, dans lequel l'alimentation électrique partagée est électriquement connectée audit au moins un dispositif électrique de protection contre le givre relié à ce dispositif de commutation, l'alimentation électrique partagée pouvant alors fournir un courant électrique d'alimentation à ce dispositif électrique de protection contre le givre.

Par ailleurs, dans certains modes de réalisation avantageux d'un procédé selon l'invention ledit dispositif de commutation est placé :
- dans un premier état dans lequel l'alimentation électrique partagée est électriquement connectée audit moteur de compresseur de façon à pouvoir lui fournir un courant électrique d'alimentation si des premiers critères d'altitude sont satisfaits,
- dans ledit deuxième état (dans lequel l'alimentation électrique partagée est électriquement connectée à au moins un dispositif électrique de protection contre le givre relié à ce dispositif de commutation) si des deuxièmes critères d'altitude, différents desdits premiers critères d'altitude, sont satisfaits.

Dans ledit premier état, une connexion électrique peut éventuellement être maintenue entre l'alimentation électrique partagée et au moins un dispositif électrique de protection contre le givre. Néanmoins, dans certains modes de réalisation avantageux de l'invention, dans ledit premier état, l'alimentation électrique partagée est électriquement déconnectée de tout dispositif électrique de protection contre le givre relié à ce dispositif de commutation. Ainsi, dans le premier état, l'alimentation électrique partagée fournit de la puissance électrique uniquement au moteur de compresseur.

En outre, dans ledit deuxième état, une connexion électrique peut éventuellement être maintenue entre l'alimentation électrique partagée et ledit moteur de compresseur, si une partie de la puissance électrique fournie par l'alimentation électrique partagée est disponible pour ce moteur de compresseur. Néanmoins, dans certains modes de réalisation préférentiels de l'invention, dans ledit deuxième état, l'alimentation électrique partagée est électriquement déconnectée dudit moteur de compresseur, et n'est donc susceptible de délivrer de la puissance électrique qu'à au moins un dispositif électrique de protection contre le givre.

Les critères d'altitude de l'aéronef sont avantageusement des critères prédéterminés, et peuvent faire l'objet de nombreuses variantes. Ils peuvent comprendre par exemple des critères portant sur une altitude de vol ou une plage d'altitude de vol.

Dans certains modes de réalisation préférentiels d'un réseau et d'un procédé selon l'invention au moins une partie des critères d'altitude est choisie parmi les critères d'altitude suivants :
- lesdits premiers critères d'altitude de l'aéronef sont satisfaits pour au moins une alimentation électrique partagée si l'aéronef est au sol,
- lesdits premiers critères d'altitude de l'aéronef sont satisfaits pour au moins une alimentation électrique partagée reliée à un moteur de compresseur d'un système électrique de conditionnement d'air si l'altitude de l'aéronef est supérieure à une altitude, dite haute altitude, au-dessus de laquelle tous les systèmes de conditionnement d'air doivent être activés, les besoins de pressurisation de la cabine par les systèmes de conditionnement d'air étant maximums ; cette haute altitude est par exemple de l'ordre de 31000 pieds (9449 m) ou 9000 m,
- lesdits premiers critères d'altitude de l'aéronef sont satisfaits pour au moins une alimentation électrique partagée reliée à un moteur de compresseur d'un dispositif de refroidissement d'équipements embarqués de l'aéronef si l'aéronef est à une altitude comprise dans une plage d'altitudes intermédiaires, c'est-à-dire supérieure à une altitude minimum et inférieure à une altitude maximum, pour laquelle les besoins en refroidissement des équipements embarqués sont importants ; cette altitude minimum est par exemple de l'ordre de 15000 pieds (4572 m) ou 4500 m et cette altitude maximum est par exemple de l'ordre de 31000 pieds (9449 m) ou 9000 m ;
- lesdits premiers critères d'altitude de l'aéronef sont satisfaits pour au moins une alimentation électrique partagée reliée à un moteur de compresseur d'un système électrique de conditionnement d'air si l'altitude de l'aéronef est inférieure à une altitude, dite altitude intermédiaire, en dessous de laquelle ce système de conditionnement d'air doit être activé pour assurer les besoins de contrôle thermique de l'air de la cabine ; cette altitude intermédiaire est par exemple de l'ordre 15000 pieds (4572 m) ou 4500 m,
- lesdits deuxièmes critères d'altitude de l'aéronef sont satisfaits pour au moins une alimentation électrique partagée lorsque l'aéronef est en vol (c'est-à-dire l'altitude est supérieure à celle du sol),
- lesdits deuxièmes critères d'altitude de l'aéronef sont satisfaits pour au moins une alimentation électrique partagée si l'aéronef est en vol et que l'altitude est inférieure à une altitude maximum choisie de telle sorte qu'au dessus de cette altitude maximum les risques de givrage sont plus faibles compte tenu de la composition de l'atmosphère ; ladite altitude maximum est par exemple de l'ordre 31000 pieds (9449 m) ou de l'ordre de 9000 m ;
- lesdits deuxièmes critères d'altitude de l'aéronef sont satisfaits pour au moins une alimentation électrique partagée reliée à un moteur de compresseur d'un système de conditionnement d'air si l'aéronef est à une altitude supérieure à une altitude minimum choisie de telle sorte qu'au-dessus de cette altitude minimum les besoins de contrôle thermique de l'air dans la cabine de l'aéronef sont suffisamment faibles pour permettre une désactivation de ce système de conditionnement d'air, et si l'aéronef est à une altitude inférieure à une altitude, dite haute altitude, au-dessus de laquelle tous les systèmes de conditionnement d'air doivent être activés pour assurer la pressurisation de la cabine ; cette altitude minimum est par exemple de l'ordre de 15000 pieds (4572 m) ou 4500 m et cette haute altitude est par exemple de l'ordre de 31000 pieds (9449 m) ou 9000 m,
- lesdits deuxièmes critères d'altitude de l'aéronef sont satisfaits pour au moins une alimentation électrique partagée reliée à un moteur de compresseur d'un dispositif de refroidissement d'équipements embarqués de l'aéronef si l'aéronef est à une altitude supérieure à une altitude, dite haute altitude, au-dessus de laquelle les besoins en refroidissement des équipements embarqués par un tel dispositif de refroidissement sont plus faibles, ces équipements embarqués pouvant être refroidis par de l'air extérieur ; cette haute altitude est par exemple de l'ordre de 31000 pieds (9449 m) ou 9000 m.

Avantageusement, dans certains modes de réalisation de l'invention, le courant électrique délivré par une majorité des alimentations partagées est fourni aux dispositifs électriques de protection contre le givre reliés à ces alimentations partagées lorsque l'aéronef vole à une altitude inférieure ou égale 31000 pieds (9449 m) ou 9000 m et lorsque des critères représentatifs de conditions de givrage sont satisfaits.

Avantageusement, dans certains modes de réalisation de l'invention, le courant électrique délivré par une majorité -notamment par la totalité- des alimentations partagées reliées aux systèmes de conditionnement d'air d'aéronef est fourni aux moteurs de compresseur de ces systèmes de conditionnement d'air, lorsque l'aéronef vole à une altitude supérieure à 31000 pieds (9449 m) ou 9000 m.

Par ailleurs, d'autres critères peuvent être pris en considération (ladite unité de commande étant programmée à cet effet) pour déterminer l'état dans lequel chaque dispositif de commutation doit être placé. En particulier, il peut s'agir de critères représentatifs de conditions de givrage (présence de givre et/ou caractéristiques d'une couche de givre comme par exemple son épaisseur et/ou la température extérieure de l'aéronef et/ou contenu en eau liquide des nuages et/ou température d'une surface extérieure de l'aéronef et/ou sur une plage de température d'une surface extérieure de l'aéronef) et/ou de critères sur une température et/ou une pression dans une cabine de l'aéronef ; et/ou de critères sur une plage de température et/ou une plage de pression dans une cabine de l'aéronef ; et/ou de critères sur une vitesse de rotation dudit moteur de compresseur ; et/ou de critères sur le débit et/ou sur la plage de débit dudit moteur de compresseur ; ou autres.

Chaque dispositif de commutation est un dispositif de commutation susceptible d'être commandé pour pouvoir être placé dans l'un ou l'autre de différents états. Cette commande peut être entièrement automatique (entièrement sous l'effet d'une unité de commande de l'aéronef) ; ou entièrement manuelle (le dispositif de commutation étant du type actionné manuellement par un opérateur humain tel qu'un pilote) ; ou partiellement automatique (le dispositif de commutation étant actionné par l'intermédiaire d'une unité de commande mais sous le contrôle d'un opérateur humain et/ou à l'initiative d'un opérateur humain). Ainsi, dans un réseau et un procédé selon l'invention, rien n'empêche de prévoir, en variante ou en combinaison, une commande manuelle pouvant être actionnée par un pilote de l'aéronef pour commander au moins pour partie manuellement l'état de chaque dispositif de commutation.

Cela étant, avantageusement et selon l'invention au moins un -notamment chaque- tel dispositif de commutation (interposé entre une alimentation électrique partagée et au moins un dispositif électrique de protection contre le givre) est un dispositif de commutation à commande électrique relié à une unité de commande adaptée pour délivrer des signaux de commande de ce dispositif de commutation à commande électrique, lesdits signaux de commande étant adaptés pour placer le dispositif de commutation dans ledit deuxième état si lesdits critères d'altitude de l'aéronef sont satisfaits.

Un procédé de distribution électrique selon l'invention est aussi avantageusement caractérisé par tout ou partie des caractéristiques mentionnées ci-dessus en référence au réseau électrique selon l'invention. En particulier, dans certains modes de réalisation avantageux d'un procédé de distribution électrique selon l'invention le courant électrique d'alimentation délivré à chaque dispositif électrique de protection contre le givre relié à un dispositif de commutation est ajusté par un asservissement en température de ladite surface extérieure de l'aéronef.

L'invention s'étend également à un réseau électrique adapté pour la mise en œuvre d'un procédé de distribution électrique selon l'invention.

L'invention s'étend également à un aéronef comprenant un réseau électrique selon l'invention. Elle s'étend également à un aéronef dans lequel un procédé de distribution électrique selon l'invention est mis en œuvre.

Un réseau électrique et un aéronef selon l'invention comportent un faible nombre de dispositifs électriques de protection contre le givre -notamment un faible nombre de tapis chauffants de protection contre le givre-. Ainsi, dans certains modes de réalisation d'un réseau électrique et d'un aéronef selon l'invention ce nombre est compris entre 1 et 20, valeurs incluses ; plus particulièrement entre 5 et 15 ; par exemple de l'ordre de 12. Néanmoins, rien n'empêche d'avoir un nombre de tapis chauffants de protection contre le givre supérieur à 15.

L'invention concerne également un réseau électrique d'aéronef, un procédé de distribution électrique à bord d'un aéronef, et un aéronef caractérisés en combinaison par tout ou partie des caractéristiques mentionnées ci-dessus ou ci-après.

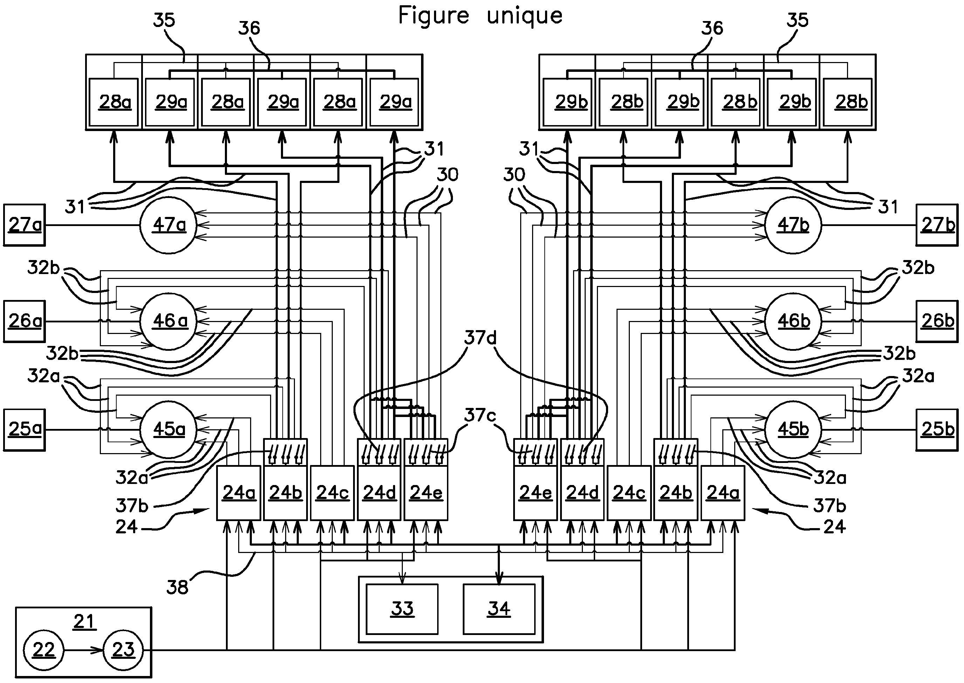

D'autres buts, caractéristiques et avantages de l'invention apparaîtront à la lecture de la description suivante donnée à titre non limitatif et qui se réfère à la figure unique annexée qui est un schéma fonctionnel d'un mode de réalisation d'un réseau électrique selon l'invention.

Un réseau électrique selon l'invention est intégré à bord d'un aéronef, et en particulier d'un avion.

Le réseau présente une structure symétrique par rapport au plan de symétrie longitudinal de l'avion, délimitant un côté gauche correspondant à l'aile gauche de la voilure principale de l'avion et un côté droit correspondant à l'aile droite de la voilure principale de l'avion.

Le réseau électrique comprend au moins un dispositif, dit générateur 21 de puissance, de génération d'un courant électrique de puissance. En particulier, le générateur 21 de puissance comprend au moins un générateur 22 de courant électrique alternatif. Un tel générateur 22 de courant électrique alternatif peut être un alternateur entraîné par un moteur principal de l'aéronef (par exemple par un turboréacteur), ou un alternateur entraîné par une unité de puissance auxiliaire (turbomachine auxiliaire utilisée au sol lorsque les moteurs principaux d'aéronef sont à l'arrêt).

Le générateur 21 de puissance comprend également un convertisseur 23 alternatif/continu relié électriquement à chaque générateur 22 de courant électrique alternatif et adapté pour convertir le courant électrique alternatif délivré par ce générateur 22 de courant électrique alternatif, en un courant électrique de puissance sous forme d'un courant continu, dit courant continu électrique de puissance.

Le réseau électrique comprend également plusieurs circuits 24 d'alimentation électrique à puissance variable agencés chacun pour pouvoir recevoir le courant continu électrique de puissance et délivrer un courant électrique, dit courant électrique d'alimentation.

Chaque circuit d'alimentation électrique à puissance variable est constitué d'un onduleur 24 apte à délivrer un courant à puissance d'alimentation variable. En particulier, ce courant à puissance variable est un courant triphasé. Chaque onduleur est relié au convertisseur 23 alternatif/continu par une liaison 30 électrique de façon à recevoir un courant continu électrique de puissance.

En particulier, chaque onduleur délivre un courant électrique dont la puissance est ajustée par modulation de largeur d'impulsion (MLI ou en anglais PWM). Ainsi, la puissance électrique délivrée par l'onduleur dépend d'un rapport cyclique de hachage du courant continu électrique de puissance reçu par l'onduleur et peut donc être aisément et continûment ajustée entre une valeur nulle et une puissance maximale.

Dans l'exemple représenté, l'aéronef comprend, de chaque côté, deux dispositifs de gestion thermique qui sont des systèmes 25, 26 électriques de conditionnement d'air EECS. Il comprend également, de chaque côté, un dispositif de gestion thermique, dit dispositif 27 de refroidissement VCS, qui est un dispositif de refroidissement d'équipements embarqués, ce dispositif de refroidissement comprenant au moins une boucle thermique à fluide caloporteur diphasique, notamment à cycle vapeur. Chaque système 25, 26 électrique de conditionnement d'air EECS permet de refroidir ou de réchauffer l'air d'une zone de l'aéronef telle qu'une cabine de l'aéronef par exemple. Les systèmes 25, 26 électriques de conditionnement d'air EECS permettent également de pressuriser chaque cabine. Chaque système 25, 26 électrique de conditionnement d'air EECS comprend une boucle thermique de circulation d'air. Par ailleurs, les dispositifs 27 de refroidissement VCS permettent, par exemple, de gérer thermiquement différents équipements embarqués tels que des équipements électriques et/ou électroniques et/ou informatiques d'aéronef en les refroidissant.

Chaque dispositif 25, 26, 27 de gestion thermique comprend au moins un moteur électrique, dit moteur 45, 46, 47 de compresseur, d'entraînement d'au moins un compresseur, non représenté, d'une boucle thermique de ce dispositif 25, 26, 27 de gestion thermique. Le compresseur permet d'entraîner en circulation le fluide caloporteur présent dans la boucle thermique du dispositif 25, 26, 27 de gestion thermique. Dans le cas d'une boucle à fluide gazeux ou diphasique le compresseur permet également de réchauffer le fluide caloporteur.

Chaque onduleur 24 est relié à un moteur 45, 46, 47 de compresseur d'un dispositif 25, 26, 27 de gestion thermique. Plus particulièrement, de chaque côté de l'aéronef, deux onduleurs 24a, 24b d'alimentation électrique sont reliés par une liaison 32a électrique triphasée à un moteur 45 de compresseur d'un premier système 25 électrique de conditionnement d'air EECS, deux onduleurs 24c, 24d d'alimentation électrique sont reliés par une liaison 32b électrique triphasée à un moteur 46 de compresseur d'un deuxième système 26 électrique de conditionnement d'air EECS, et un onduleur 24e d'alimentation électrique est relié par une liaison 30 électrique triphasée à un moteur 47 de compresseur d'un dispositif 27 de refroidissement VCS.

Chaque moteur 45, 46 de compresseur des systèmes 25, 26 électriques de conditionnement d'air EECS est avantageusement un moteur à deux bobinages indépendants (en ce qui concerne leur alimentation électrique) pouvant être alimentés électriquement sélectivement comme décrit par exemple par US 8564238. Chaque onduleur 24 d'alimentation électrique permet ainsi d'alimenter en énergie électrique l'un des deux bobinages d'un moteur de compresseur. Un tel moteur de compresseur peut donc être alimenté soit à puissance maximale par les deux onduleurs reliés à ses deux bobinages, soit à mi-puissance par un seul onduleur.

Néanmoins, rien n'empêche en variante d'alimenter un moteur de compresseur par un seul onduleur. Ainsi, dans l'exemple représenté, le moteur 47 de compresseur de chaque dispositif 27 de refroidissement VCS est relié électriquement uniquement à l'onduleur d'un circuit 24e d'alimentation électrique qui permet d'alimenter ce moteur de compresseur qui ne comporte qu'un seul bobinage.

Le réseau électrique de l'aéronef comprend également une pluralité de dispositifs 28, 29 électriques, dits dispositifs électriques de protection contre le givre, de protection de surfaces extérieures de l'aéronef contre le givre. Ces dispositifs 28, 29 électriques de protection contre le givre sont adaptés pour prévenir l'apparition de givre et/ou supprimer le givre s'accumulant sur ces surfaces extérieures. Les dispositifs 28, 29 électriques de protection contre le givre sont placés par exemple de façon à protéger contre le givre des becs mobiles de bords d'attaque d'une aile de l'avion, par exemple trois becs mobiles de chaque côté de l'avion. Plus particulièrement, chaque dispositif 28, 29 électrique de protection contre le givre est un tapis de chauffage par effet Joule.

Chaque dispositif 28, 29 électrique de protection contre le givre est relié à au moins l'un 24b, 24d, 24e des onduleurs 24 d'alimentation électrique à puissance variable, par l'intermédiaire d'un dispositif 37b, 37d, 37e de commutation auquel le moteur 45, 46, 47 de compresseur correspondant est également relié. Chaque onduleur 24b, 24d, 24e est relié à trois dispositifs 28 ou 29 électriques de protection contre le givre respectivement par trois conducteurs 31 électriques. Chacun de ces trois conducteurs 31 électriques permet de transmettre une phase du courant électrique triphasé délivré par l'onduleur 24b, 24d, 24e, c'est-à-dire un courant électrique monophasé, les trois courants électriques monophasés transmis dans ces trois conducteurs 31 électriques étant déphasés les uns des autres. Cela permet en particulier d'alimenter trois dispositifs électriques de protection contre le givre à partir d'une unique alimentation électrique partagée. Par ailleurs, les trois dispositifs 28 ou 29 électriques de protection contre le givre reliés à un même onduleur 24b, 24d, 24e pour pouvoir être alimentés électriquement respectivement par chacune des phases de cet onduleur sont reliés entre eux pour permettre cette alimentation électrique, notamment selon un montage en étoile avec neutre flottant. Pour ce faire, trois dispositifs 28 électriques de protection contre le givre sont reliés entre eux par une liaison 35 électrique, et trois autres dispositifs 29 électriques de protection contre le givre sont reliés entre eux par une autre liaison 36 électrique. Le courant électrique alimentant ainsi un dispositif 28, 29 électrique de protection contre le givre permet de chauffer ce dispositif 28, 29 électrique de protection contre le givre par effet Joule.

Chaque dispositif 28, 29 électrique de protection contre le givre est conçu et adapté pour pouvoir recevoir la puissance d'alimentation pouvant être délivrée sur l'une de ces phases par chaque onduleur 24b, 24d, 24e auquel il est relié simultanément, et pour fonctionner correctement, c'est-à-dire produire un chauffage adapté à l'effet recherché sur le givre.

Par exemple, un onduleur 24 d'alimentation électrique d'un moteur de compresseur de système électrique de conditionnement d'air peut délivrer typiquement une puissance électrique maximale d'alimentation par un courant triphasé de l'ordre de 50 kW, soit 16,6 kW par phase. En conséquence, pour pouvoir alimenter un tapis chauffant constituant un dispositif électrique de protection contre le givre indépendant par l'une des phases d'un tel onduleur 24, il suffit de dimensionner ce tapis chauffant pour qu'il puisse recevoir une puissance électrique maximum de 17 kW.

Il est à noter en outre qu'un tel tapis chauffant fonctionnant alors avec une puissance électrique relativement élevée, le nombre de dispositifs 28, 29 électriques de protection contre le givre d'un réseau électrique selon l'invention est en pratique plus faible que celui nécessaire dans l'état de la technique. Ainsi, dans l'exemple représenté, le réseau électrique selon l'invention comprend douze zones chauffantes.

Les onduleurs 24b, 24d, 24e connectés à un moteur 45, 46, 47 de compresseur et à au moins un dispositif électrique 28, 29 de protection contre le givre par l'intermédiaire d'un dispositif 37b, 37d, 37e de commutation constituent des alimentations électriques partagées. Chaque alimentation partagée permet donc d'alimenter, dans un premier état du dispositif commutation, au moins en partie un moteur d'entraînement d'au moins un compresseur d'un dispositif 25, 26, 27 de gestion thermique et, dans un deuxième état du dispositif de commutation, au moins un dispositif 28, 29 électrique de protection contre le givre.

Par contre, les onduleurs 24a et 24c ne sont pas des alimentations électriques partagées et sont en permanence électriquement connectés chacun uniquement à un moteur de compresseur d'un système 45, 46 électrique de conditionnement d'air EECS. Chacun de ces onduleurs 24a et 24c est donc dédié exclusivement à l'alimentation électrique d'un moteur de compresseur d'un système 45, 46 électriques de conditionnement d'air EECS.

Le moteur 45, 46 de compresseur de chaque système 25, 26 électrique de conditionnement d'air EECS est un moteur à deux bobinages alimenté par deux onduleurs 24a, 24b, respectivement 24c, 24d dont l'un 24b, respectivement 24d, est une alimentation partagée tandis que l'autre 24a, 24c n'est pas une alimentation partagée et est uniquement dédié à l'alimentation électrique d'un des bobinages du moteur. Ainsi, de chaque côté de l'aéronef, c'est-à-dire pour chaque aile de la voilure principale de l'aéronef :
- trois dispositifs 28 électriques de protection contre le givre peuvent être alimentés par un onduleur 24b d'alimentation partagée pouvant aussi alimenter un bobinage du moteur 45 de compresseur d'un premier système 25 électrique de conditionnement d'air EECS,
- trois dispositifs 29 électriques de protection contre le givre peuvent être alimentés :
   o par un premier onduleur 24d d'alimentation partagée pouvant aussi alimenter un bobinage du moteur 46 de compresseur d'un deuxième système 26 électrique de conditionnement d'air EECS,
   o par un deuxième onduleur 24e d'alimentation partagée pouvant aussi alimenter un moteur 47 de compresseur d'un dispositif 27 de refroidissement VCS.

Le premier onduleur 24d et le dispositif 37d de commutation correspondant sont reliés en parallèle avec le deuxième onduleur 24e et le dispositif 37e de commutation correspondant pour l'alimentation des dispositifs 29 électriques de protection contre le givre, les bornes des deux dispositifs 37d, 37e de commutation reliées à un même dispositif 29 électrique de protection contre le givre étant reliées en un nœud.

Chaque dispositif 37b, 37d, 37e de commutation est adapté pour pouvoir être placé dans un premier état dans lequel le courant électrique délivré par l'onduleur 24b, 24d, 24e d'alimentation partagée auquel il est relié, est fourni au moteur de compresseur relié à ce dispositif 37b, 37d, 37e de commutation. En outre, chaque dispositif 37b, 37d, 37e de commutation est adapté pour pouvoir être placé au moins dans un deuxième état dans lequel le courant électrique délivré par l'onduleur 24b, 24d, 24e d'alimentation partagée auquel il est relié, à chaque dispositif 28, 29 électrique de protection contre le givre relié à ce dispositif 37b, 37d, 37e de commutation.

Les dispositifs 29 électriques de protection contre le givre reliés en parallèle aux premier et deuxième onduleurs 24d, 24e peuvent être alimentés par le premier onduleur 24d relié au système 26 électrique de conditionnement d'air EECS et/ou par le deuxième onduleur 24e relié au dispositif 27 de refroidissement VCS. Les dispositifs 37d, 37e de commutation reliés à ces onduleurs 24d, 24e peuvent être placés simultanément ou alternativement dans le deuxième état d'alimentation électrique des dispositifs 29 électriques de protection contre le givre. Cela permet d'alimenter ces dispositifs 29 électriques de protection contre le givre en alimentant simultanément en parallèle ou alternativement par ces onduleurs 24d, 24e, notamment en fonction des besoins de climatisation.

Les dispositifs 37b, 37d, 37e de commutation sont adaptés pour être commandés électriquement. En particulier, les dispositifs 37b, 37d, 37e de commutation peuvent être choisis dans le groupe formé des circuits électromécaniques et électroniques (transistors, thyristors).

Les dispositifs 37b, 37d, 37e de commutation sont commandés électriquement par une logique de commande. La logique de commande peut être mise en œuvre par une unité 33 de commande formée d'un dispositif de traitement de données numériques et des interfaces de communication en entrée/sortie. Cette unité 33 de commande comprend par exemple au moins une carte électronique comprenant au moins un microprocesseur et/ou au moins un microcontrôleur. Elle peut être formée par au moins un système informatique (calculateur) de bord d'aéronef.

La logique de commande détermine la puissance d'alimentation, dite puissance d'alimentation déterminée, du courant électrique d'alimentation délivré par chaque onduleur 24. L'unité 33 de commande est reliée par une liaison 38 électrique aux onduleurs 24 afin de les commander pour qu'ils délivrent la puissance d'alimentation déterminée. La logique de commande est adaptée pour déterminer la puissance d'alimentation devant être délivrée par chaque onduleur 24 par calcul, selon que le dispositif 37b, 37d, 37e de commutation de l'onduleur 24 est placé dans le premier état ou dans le deuxième état.

Dans le premier état du dispositif 37b, 37d, 37e de commutation, la logique de commande est adaptée pour ajuster la vitesse des moteurs 45, 46, 47 de compresseur des dispositifs 25, 26, 27 ou bien la puissance d'alimentation délivrée aux moteurs 45, 46, 47 de compresseur des dispositifs 25, 26, 27 de gestion thermique de façon bien connue en soi.

Dans le deuxième état du dispositif 37b, 37d, 37e de commutation, la logique de commande est adaptée pour ajuster la puissance d'alimentation délivrée aux dispositifs 28, 29 électriques de protection contre le givre. Pour ce faire, la logique de commande est par exemple adaptée pour calculer la puissance d'alimentation déterminée à partir de données, dites données de température, représentatives d'une température mesurée par des capteurs de température placés au voisinage des dispositifs 28, 29 électriques de protection contre le givre, par exemple sur les bords d'attaque d'une aile de l'aéronef, ces capteurs de température étant reliés à l'unité 33 de commande.

Par exemple, la logique de commande détermine la puissance d'alimentation selon un asservissement comprenant au moins une régulation en température. Selon cette régulation en température, la logique de commande reçoit une température consigne (déterminée pour empêcher l'apparition de givre et/ou supprimer le givre sur les surfaces extérieures de l'aéronef telles que les ailes de l'avion), et compare cette température de consigne à la température mesurée par l'un au moins des capteurs de température. En fonction de la différence de ces températures, la logique de commande détermine la puissance d'alimentation électrique devant être fournie aux dispositifs 28, 29 électriques de protection contre le givre pour atteindre au moins la température de consigne. Un tel asservissement peut être réalisé notamment par un régulateur proportionnel et/ou intégral et/ou dérivé, notamment un régulateur PID. La température de consigne peut être une température fixe ou, de préférence, une température minimum supérieure à la température de givrage.

La logique de commande peut également incorporer une régulation de la puissance d'alimentation délivrée par chaque onduleur 24 en fonction de la puissance d'alimentation préalablement déterminée par l'asservissement en température. Cette régulation de puissance détermine en particulier une valeur de rapport cyclique de hachage devant être appliquée au courant électrique délivré par cet onduleur. La gestion des puissances d'alimentation délivrées par les onduleurs en fonction d'un rapport cyclique calculé par la logique de commande permet une régulation fine et une optimisation de la puissance consommée par les dispositifs 25, 26, 27 de gestion thermique et par les dispositifs 28, 29 électriques de protection contre le givre.

La commande de l'état des dispositifs 37b, 37d, 37e de commutation par la logique de commande peut s'effectuer notamment selon une matrice de commutation stockée en mémoire de l'unité 33 de commande. La matrice de commutation est définie selon les exigences du concepteur de l'aéronef et peut être reconfigurée dynamiquement en temps réel par la logique de commande en cas de panne de façon à reconfigurer le réseau électrique. Par exemple, en cas de panne de l'onduleur 24e et en cas de conditions de givrage, le fonctionnement des dispositifs 29 électriques de protection contre le givre étant prioritaire sur celui du système 26 électrique de conditionnement d'air EECS, le réseau électrique est reconfiguré de telle sorte que le dispositif de commutation 37d est placé dans son deuxième état dans lequel l'onduleur 24d délivre un courant électrique d'alimentation aux dispositifs 29 électriques de protection contre le givre. Ainsi, le moteur 46 de compresseur du système 26 électrique de conditionnement d'air EECS, étant toujours alimenté par l'onduleur 24c, fonctionne à demi-puissance.

Un exemple de matrice de commutation de la logique de commande est donné par le tableau 1 ci-après. Dans ce tableau, EECS désigne le fait que l'onduleur alimente un système 25, 26 électrique de conditionnement d'air, le dispositif de commutation correspondant étant dans le premier état ; VCS désigne le fait que l'onduleur alimente un dispositif 27 de refroidissement, le dispositif de commutation correspondant étant dans le premier état ; EWIPS désigne le fait que l'onduleur alimente un dispositif 28, 29 électriques de protection contre le givre, le dispositif de commutation correspondant étant dans le deuxième état ; X désigne le fait que l'onduleur est inactif, soit que le dispositif de commutation correspondant étant dans un troisième état dans lequel l'onduleur n'est relié à aucune charge électrique, soit qu'il est inactivé par la logique de commande.

**Tableau 1**

| | | Onduleurs côté gauche | | | | | Onduleurs côté droit | | | | |
|---|---|---|---|---|---|---|---|---|---|---|---|
| Critères de givrage | altitude | 24a | 24b | 24c | 24d | 24e | 24e | 24d | 24c | 24b | 24a |
| absence de givrage | sol | EECS 45a | EECS 45a | EECS 46a | EECS 46a | VCS 47a | VCS 47b | EECS 46b | EECS 46b | EECS 45b | EECS 45b |
| givrage possible ou avéré | sol | EECS 45a | X | EECS 46a | EECS 46a | VCS 47a | VCS 47b | EECS 46b | EECS 46b | X | EECS 45b |
| | < 15000 pieds (4572 m) | EECS 45a | EWIPS 28a | EECS 46a | EECS 46a | EWIPS 29a | EWIPS 29b | EECS 46b | EECS 46b | EWIPS 28b | EECS 45b |
| | 15000 pieds (4572 m) à 31000 pieds (9449 m) | EECS 45a | EWIPS 28a | EECS 46a | EWIPS 29a | VCS 47a | VCS 47b | EWIPS 29b | EECS 46b | EWIPS 28b | EECS 45b |
| | >31000 pieds (9449 m) | EECS 45a | EECS 45a | EECS 46a | EECS 46a | EWIPS 29a | EWIPS 29b | EECS 46b | EECS 46b | EECS 45b | EECS 45b |

Ainsi, dans cet exemple, l'unité 33 de commande délivre des signaux de commande à chaque dispositif 37b, 37d, 37e de commutation pour le placer dans un état choisi au moins parmi le premier état et le deuxième état en fonction de critères prédéterminés qui comprennent d'une part des critères d'altitude de l'aéronef, d'autre part éventuellement des critères représentatifs de conditions de givrage (déterminées par exemple par un capteur mécanique de givrage associé à la surface extérieure de l'aéronef).

Dans l'exemple, lorsque l'aéronef est au sol, il n'est pas nécessaire d'alimenter les dispositifs 28, 29 électriques de protection contre le givre, même en présence de conditions de givrage, la protection des aéronefs au sol contre le givre étant réalisée en général par des systèmes aéroportuaires distincts. Par contre, lors d'un vol à basse altitude, c'est-à-dire à une altitude typiquement inférieure à 15000 pieds (4572 m), ou à moyenne altitude, c'est-à-dire à une altitude typiquement comprise entre 15000 pieds (4572 m) et 31000 pieds (9449 m), les besoins en refroidissement des systèmes de conditionnement d'air sont plus faibles et quatre onduleurs peuvent être utilisés pour la protection de l'aéronef contre le givre. Lors d'un vol à haute altitude, typiquement supérieure à 31000 pieds (9449 m), les conditions de givrage ne sont plus rencontrées de sorte qu'il n'est pas nécessaire d'alimenter l'ensemble des dispositifs électrique de protection contre le givre. Néanmoins, certains dispositifs électrique de protection contre le givre peuvent être alimentés à haute-altitude de façon à assurer une performance minimum de protection contre le givre. En outre, les systèmes électriques de conditionnement d'air nécessitent de fonctionner à pleine puissance car le débit volumique du fluide caloporteur monophasique, notamment de l'air, dans le compresseur de chaque système 25, 26 électrique de conditionnement d'air EECS est faible. En outre, à haute altitude, l'alimentation des dispositifs 27 de refroidissement VCS n'est pas nécessaire. Bien entendu, toute autre variante de logique de commande des dispositifs de commutation peut être mise en œuvre, selon les architectures d'aéronef, les applications et les besoins.

Une unité 34 de surveillance distincte de l'unité 33 de commande permet de surveiller le fonctionnement du réseau électrique. L'unité 34 de surveillance comprend un dispositif de traitement de données numériques et des interfaces de communication en entrée/sortie. L'unité 34 de surveillance comprend au moins une carte électronique comprenant au moins un microprocesseur et/ou au moins un microcontrôleur. Elle peut être formée par au moins un système informatique (calculateur) de bord d'aéronef distinct de celui formant l'unité 33 de commande.

Dans un procédé de distribution électrique à bord d'un aéronef, comprenant un réseau électrique tel que représenté, le générateur 22 de courant électrique alternatif du dispositif 21 de génération d'un courant électrique génère un courant électrique alternatif converti en un courant continu électrique de puissance par le convertisseur 23 alternatif/continu. Ce courant continu électrique de puissance est délivré à chaque onduleur 24 qui délivre un courant électrique d'alimentation à puissance variable déterminée par la logique de commande.

Lorsque la logique de commande n'identifie pas la présence de conditions de givrage l'unité 33 de commande place chaque dispositif 37b, 37d, 37e de commutation associé à un onduleur 24b, 24d, 24e d'alimentation partagée, dans son premier état dans lequel le courant électrique délivré par l'onduleur 24b, 24d, 24e d'alimentation partagée est fourni au dispositif 25, 26, 27 de gestion thermique relié à ce dispositif 37b, 37d, 37e de commutation. Lorsque la logique de commande identifie la présence de conditions de givrage l'unité 33 de commande place au moins un dispositif 37b, 37d, 37e de commutation associé à un onduleur 24b, 24d, 24e d'alimentation partagée, dans son deuxième état dans lequel le courant électrique délivré par l'onduleur 24b, 24d, 24e d'alimentation partagée est fourni aux dispositifs 28, 29 électriques de protection contre le givre reliés à ce dispositif 37b, 37d, 37e de commutation. Plus particulièrement, lorsque la logique de commande identifie la présence de conditions de givrage elle commande les dispositifs 37b, 37d, 37e de commutation selon la matrice de commutation stockée en mémoire de l'unité 33 de commande.

Ainsi, sur certaines phases de vol, le courant d'alimentation délivré par certains onduleurs 24b, 24d, 24e d'alimentation partagée peut servir pour alimenter les dispositifs 28, 29 électriques de protection contre le givre selon une puissance d'alimentation électrique variable. En effet, en conditions de givrage, les capacités de refroidissement des dispositifs 25, 26, 27 de gestion thermique de l'aéronef peuvent être réduites tout en maintenant un niveau de confort équivalent à celui obtenu lorsque des conditions de givrage ne sont pas présentes. Cela étant, en présence de conditions de givrage, au moins une partie des systèmes 25, 26 de conditionnement d'air est maintenue active pour assurer notamment la pressurisation de la cabine et une température appropriée dans cette dernière.

Par exemple, des conditions de givrage peuvent être rencontrées lorsque l'aéronef vole à une altitude comprise entre le sol et 9000 mètres tel que spécifié dans la réglementation CS-25. Au-dessus de 9000 mètres d'altitude, la réglementation CS-25 ne donne pas d'exigence de performance pour la protection contre le givre. Lorsque l'avion est au sol avec une température chaude, par exemple supérieure à 15°C, tous les onduleurs 24 d'alimentation électrique doivent alimenter les dispositifs 25, 26, 27 de gestion thermique pour la climatisation de la cabine et le refroidissement des équipements de l'avion.

L'invention peut faire l'objet de nombreuses variantes de réalisation par rapport au mode de réalisation décrit ci-dessus et représenté sur la figure. En particulier, les dispositifs 28, 29 électriques de protection contre le givre peuvent être reliés électriquement selon une architecture différente. Les dispositifs de commutation peuvent être commandés indépendamment de la détection de conditions de givrage, ou au contraire uniquement en fonction non seulement des critères d'altitude mais également des critères représentatifs des conditions de givrage. Par ailleurs, les dispositifs 28, 29 électriques de protection contre le givre peuvent également être placés sur toute surface extérieure de l'aéronef, notamment choisie parmi des gouvernes, des portions d'ailes de la voilure principale d'un avion, des portions d'ailes d'une voilure secondaire d'un avion, des volets, des pales d'hélice, des pales d'hélicoptère, de l'entrée d'air ram air, de la nacelle du moteur, du pare-brise de l'aéronef... Par exemple, des bords d'attaque ou d'autres portions d'ailes de l'aéronef peuvent être protégés par des dispositifs 28, 29 électriques de protection contre le givre. Le nombre, la nature et les caractéristiques des dispositifs 28, 29 électriques de protection contre le givre, le nombre, la nature et les caractéristiques des circuits d'alimentation électrique à puissance variable -notamment des alimentations partagées-, le nombre, la nature et les caractéristiques des dispositifs de gestion thermique, peuvent faire l'objet de toutes variantes. Les alimentations électriques partagées peuvent être adaptées pour alimenter les dispositifs électriques de protection contre le givre en courant continu. Plusieurs onduleurs différents peuvent être utilisés pour alimenter simultanément ou alternativement un même dispositif électrique de protection contre le givre et/ou un même moteur de compresseur... Dans certaines variantes de réalisation, les circuits 24 d'alimentation électrique à puissance variable sont directement alimentés par le générateur 22 en courant électrique alternatif en l'absence de convertisseur 23 alternatif/continu. Dans de telles variantes de réalisation, chaque circuit 24a, 24b, 24c, 24d et 24e d'alimentation électrique à puissance variable comprend un convertisseur 23 alternatif/continu en amont de l'onduleur de ce circuit 24a, 24b, 24c, 24d et 24e d'alimentation électrique à puissance variable.

Un réseau électrique selon l'invention peut être intégré à bord de tout type d'aéronef (avion, hélicoptère, aérostat, drone...).

## Revendications

1. Réseau électrique d'aéronef comprenant :
- au moins un dispositif (21) de génération d'un courant électrique, dit courant électrique de puissance,
- au moins un circuit (24) d'alimentation électrique à puissance variable :
o adapté pour être relié à un moteur électrique, dit moteur de compresseur, d'entraînement d'un compresseur d'un dispositif (25, 26, 27) de gestion thermique,
o agencé pour pouvoir recevoir un courant électrique de puissance et délivrer un courant électrique d'alimentation dudit moteur de compresseur selon une puissance d'alimentation variable déterminée par une logique (33) de commande,
- au moins un dispositif (28, 29) électrique de protection contre le givre d'une surface extérieure de l'aéronef,
**caractérisé en ce que** :
- ledit au moins un dispositif (28, 29) électrique de protection contre le givre est adapté pour pouvoir être alimenté électriquement par un courant électrique d'alimentation délivré par au moins un desdits circuit (24b, 24d, 24e) d'alimentation électrique à puissance variable, dit alimentation (24b, 24d, 24e) électrique partagée, d'un moteur de compresseur d'un dispositif (25, 26, 27) de gestion thermique,
- ladite au moins une alimentation électrique partagée est Z adaptée pour être reliée audit moteur de compresseur par l'intermédiaire d'un dispositif (37) de commutation auquel est également relié ledit au moins un dispositif (28, 29) électrique de protection contre le givre,
- il comporte une unité de commande dudit dispositif (37) de commutation programmée pour, si des critères d'altitude de l'aéronef sont satisfaits, placer ledit dispositif (37) de commutation dans un état, dit deuxième état, dans lequel l'alimentation (24b, 24d, 24e) électrique partagée est électriquement connectée audit au moins un dispositif (28, 29) électrique de protection contre le givre relié à ce dispositif (37) de commutation, l'alimentation (24b, 24d, 24e) électrique partagée pouvant alors fournir un courant électrique d'alimentation à ce dispositif (28, 29) électrique de protection contre le givre.

2. Réseau selon la revendication 1 **caractérisé en ce que** lorsqu'il est dans ledit deuxième état, le dispositif (37) de commutation est adapté pour déconnecter électriquement l'alimentation (24b, 24d, 24e) électrique partagée dudit moteur de compresseur.

3. Réseau selon l'une des revendications 1 ou 2 **caractérisé en ce que** ladite unité de commande est programmée pour placer ledit dispositif (37) de commutation :
- dans un premier état dans lequel l'alimentation (24b, 24d, 24e) électrique partagée est électriquement connectée audit moteur de compresseur de façon à pouvoir lui fournir un courant électrique d'alimentation si des premiers critères d'altitude sont satisfaits,
- dans ledit deuxième état si des deuxièmes critères d'altitude, différents desdits premiers critères d'altitude, sont satisfaits.

4. Réseau selon la revendication 3 **caractérisé en ce que** le dispositif (37) de commutation est adapté pour, dans ledit premier état, déconnecter électriquement l'alimentation (24b, 24d, 24e) électrique partagée de tout dispositif (28, 29) électrique de protection contre le givre relié à ce dispositif (37) de commutation.

5. Réseau selon l'une des revendications 1 à 4 **caractérisé en ce que** chaque dispositif (28, 29) électrique de protection contre le givre relié à une alimentation (24b, 24d, 24e) électrique partagée est adapté pour pouvoir être alimenté par une puissance électrique correspondant à une puissance électrique maximum du courant électrique d'alimentation dudit moteur de compresseur délivré par cette alimentation (24b, 24d, 24e) électrique partagée.

6. Réseau selon l'une quelconque des revendications 1 à 5 **caractérisé en ce qu'**au moins une alimentation (24b, 24d, 24e) électrique partagée étant une alimentation électrique triphasée délivrant un courant électrique triphasé d'alimentation dudit moteur de compresseur, ledit dispositif (37) de commutation est adapté pour pouvoir connecter une phase du courant électrique triphasé délivré par l'alimentation (24b, 24d, 24e) électrique partagée à un dispositif (28, 29) électrique de protection contre le givre.

7. Réseau selon l'une des revendications 1 à 6 **caractérisé en ce que** le seul circuit d'alimentation électrique de chaque dispositif (28, 29) électrique de protection contre le givre est une alimentation électrique partagée.

8. Réseau selon l'une quelconque des revendications 1 à 7 **caractérisé en ce qu'**au moins un dispositif (28, 29) électrique de protection contre le givre relié à une alimentation électrique partagée par un dispositif (37) de commutation est choisi dans le groupe constitué des dispositifs électriques de protection contre le givre à impulsions magnétiques, des dispositifs électriques de protection contre le givre électro thermiques, des dispositifs électriques de protection contre le givre impulsions électriques et de leurs combinaisons.

9. Réseau selon l'une des revendications 1 à 8 **caractérisé en ce qu'**au moins une alimentation (24b, 24d, 24e) électrique partagée comprend un onduleur adapté pour recevoir ce courant continu de puissance et pour délivrer un courant électrique d'alimentation selon une puissance variable déterminée par ladite logique (33) de commande.

10. Réseau selon l'une des revendications 1 à 9 **caractérisé en ce qu'**au moins une logique (33) de commande associée à une alimentation (24b, 24d, 24e) électrique partagée est adaptée pour déterminer et ajuster une valeur de la puissance du courant électrique d'alimentation délivré à chaque dispositif (28, 29) électrique de protection contre le givre.

11. Réseau selon l'une des revendications 1 à 10 **caractérisé en ce qu'**au moins un moteur de compresseur est un moteur électrique à deux bobinages et est relié à deux alimentations (24b, 24d, 24e) électriques partagées, chacune de ces deux alimentation (24b, 24d, 24e) électriques partagées étant reliée à l'un des deux bobinages du moteur de compresseur.

12. Procédé de distribution électrique à bord d'un aéronef à partir d'au moins un dispositif (21) de génération d'un courant électrique, dit courant électrique de puissance, procédé dans lequel :
- au moins un circuit (24) d'alimentation électrique à puissance variable :
o étant adapté pour être relié à un moteur électrique, dit moteur de compresseur, d'entraînement d'un compresseur d'un dispositif (25, 26, 27) de gestion thermique,
o reçoit un courant électrique de puissance et délivre un courant électrique d'alimentation dudit moteur de compresseur selon une puissance d'alimentation variable déterminée par une logique (33) de commande,
- un courant électrique est fourni à au moins un dispositif (28, 29) électrique de protection contre le givre d'une surface extérieure de l'aéronef,
**caractérisé en ce que** :
- ledit au moins un dispositif (28, 29) électrique de protection contre le givre étant adapté pour pouvoir être alimenté électriquement par un courant électrique d'alimentation délivré par au moins un desdits circuit (24b, 24d, 24e) d'alimentation électrique à puissance variable, dit alimentation électrique partagée, d'un moteur de compresseur d'un dispositif (25, 26, 27) de gestion thermique,
- ladite au moins une alimentation (24b, 24d, 24e) électrique partagée étant reliée audit moteur de compresseur par l'intermédiaire d'un dispositif (37) de commutation auquel est également relié ledit au moins un dispositif (28, 29) électrique de protection contre le givre,
- si des critères d'altitude de l'aéronef sont satisfaits ledit dispositif (37) de commutation est placé dans un état, dit deuxième état, dans lequel l'alimentation (24b, 24d, 24e) électrique partagée est électriquement connectée audit au moins un dispositif (28, 29) électrique de protection contre le givre relié à ce dispositif (37) de commutation, l'alimentation (24b, 24d, 24e) électrique partagée pouvant alors fournir un courant électrique d'alimentation à ce dispositif (28, 29) électrique de protection contre le givre.

13. Procédé selon la revendication 12, **caractérisé en ce que** dans ledit deuxième état l'alimentation (24b, 24d, 24e) électrique partagée est déconnectée électriquement dudit moteur de compresseur.

14. Procédé selon l'une des revendications 12 à 13, **caractérisé en ce que** lesdits critères d'altitude comprennent au moins un critère choisi dans le groupe constitué des critères suivants :
- l'aéronef est en vol à une altitude inférieure à une altitude maximum déterminée,
- l'aéronef est en vol à une altitude supérieure à une altitude minimum déterminée,
- l'aéronef est en vol à une altitude inférieure à une altitude maximum déterminée et supérieure à une altitude minimum déterminée.

15. Aéronef **caractérisé en ce qu'**il comprend un réseau électrique selon l'une des revendications 1 à 11.

## Patentansprüche

1. Elektrisches Netzwerk eines Flugzeugs, umfassend:
- mindestens eine Vorrichtung (21) zum Erzeugen eines elektrischen Stroms, elektrischer Leistungsstrom genannt,
- mindestens eine Stromversorgungsschaltung (24) mit variabler Leistung:
o angepasst, um an einen Elektromotor, Verdichtermotor genannt, zum Antreiben eines Verdichters einer Vorrichtung (25, 26, 27) für Wärmemanagement angeschlossen zu werden,
o angeordnet, um einen elektrischen Leistungsstrom empfangen, und einen elektrischen Versorgungsstrom des Verdichtermotors gemäß einer variablen Versorgungsleistung liefern zu können, die durch eine Steuerungslogik (33) bestimmt wird,
- mindestens eine elektrische Schutzvorrichtung (28, 29) gegen Frost einer Außenfläche des Flugzeugs, **dadurch gekennzeichnet, dass**:
- die mindestens eine elektrische Schutzvorrichtung (28, 29) gegen Frost angepasst ist, um elektrisch mit einem elektrischen Versorgungsstrom versorgt werden zu können, der von mindestens einem der Stromversorgungschaltung (24b, 24d, 24e) mit variabler Leistung, geteilte Stromversorgung (24b, 24d, 24e) genannt, eines Verdichtermotors einer Vorrichtung (25, 26, 27) für Wärmemanagement geliefert wird,
- die mindestens eine geteilte Stromversorgung angepasst ist, um anhand einer Umschaltvorrichtung (37), an die auch die mindestens eine elektrische Schutzvorrichtung (28, 29) gegen Frost angeschlossen ist, an den Verdichtermotor angeschlossen zu werden,
- es eine Steuerungseinheit der programmierten Umschaltvorrichtung (37) beinhaltet, um, falls die Höhenkriterien des Flugzeugs erfüllt sind, die Umschaltvorrichtung (37) in einen Zustand, zweiter Zustand genannt, zu platzieren, in dem die geteilte Stromversorgung (24b, 24d, 24e) elektrisch mit der mindestens einen Schutzvorrichtung (28, 29) gegen Frost verbunden ist, die an diese Umschaltvorrichtung (37) angeschlossen ist, wobei die geteilte Stromversorgung (24b, 24d, 24e) einen elektrischen Versorgungsstrom für diese elektrische Schutzvorrichtung (28, 29) gegen Frost bereitstellen kann.

2. Netzwerk nach Anspruch 1, **dadurch gekennzeichnet, dass** die Umschaltvorrichtung (37), wenn sie im zweiten Zustand ist, angepasst ist, um die geteilte Stromversorgung (24b, 24d, 24e) elektrisch von dem Verdichtermotor zu trennen.

3. Netzwerk nach einem der Ansprüche 1 oder 2, **dadurch gekennzeichnet, dass** die Steuerungseinheit programmiert ist, um die Umschaltvorrichtung (37) wie folgt zu platzieren:
- in einen ersten Zustand, in dem die geteilte Stromversorgung (24b, 24d, 24e) elektrisch mit dem Verdichtermotor verbunden ist, um ihm einen elektrischen Versorgungsstrom bereitstellen zu können, wenn erste Höhenkriterien erfüllt sind,
- in den zweiten Zustand, wenn zweite Höhenkriterien, die sich von den ersten Höhenkriterien unterscheiden, erfüllt sind.

4. Netzwerk nach Anspruch 3, **dadurch gekennzeichnet, dass** die Umschaltvorrichtung (37) angepasst ist, um in dem ersten Zustand die geteilte Stromversorgung (24b, 24d, 24e) jeder elektrischen Schutzvorrichtung (28, 29) gegen Frost, die an diese Umschaltvorrichtung (37) angeschlossen ist, elektrisch zu trennen.

5. Netzwerk nach einem der Ansprüche 1 bis 4, **dadurch gekennzeichnet, dass** jede elektrische Schutzvorrichtung (28, 29) gegen Frost, die an eine geteilte Stromversorgung (24b, 24d, 24e) angeschlossen ist, angepasst ist, um durch eine elektrische Leistung versorgt zu werden, die einer maximalen elektrischen Leistung des elektrischen Versorgungsstroms des Verdichtermotors entspricht, die durch diese geteilte Stromversorgung (24b, 24d, 24e) geliefert wird.

6. Netzwerk nach einem der Ansprüche 1 bis 5, **dadurch gekennzeichnet, dass**, da mindestens eine geteilte Stromversorgung (24b, 24d, 24e) eine dreiphasige Stromversorgung ist, die einen dreiphasigen elektrischen Versorgungsstrom des Verdichtermotors liefert, die Umschaltvorrichtung (37) angepasst ist, um eine Phase des durch die geteilte Stromversorgung (24b, 24d, 24e) gelieferten drephasigen elektrischen Stroms mit einer elektrischen Schutzvorrichtung (28, 29) gegen Frost verbinden zu können.

7. Netzwerk nach einem der Ansprüche 1 bis 6, **dadurch gekennzeichnet, dass** die einzige Stromversorgungsschaltung jeder elektrischen Schutzvorrichtung (28, 29) gegen Frost eine geteilte Stromversorgung ist.

8. Netzwerk nach einem der Ansprüche 1 bis 7, **dadurch gekennzeichnet, dass** mindestens eine elektrische Schutzvorrichtung (28, 29) gegen Frost, die durch eine Umschaltvorrichtung (37) an eine geteilte Stromversorgung angeschlossen ist, aus der Gruppe ausgewählt ist, die aus elektrischen Schutzvorrichtungen gegen Frost mit Magnetimpulsen, elektrothermischen elektrischen Schutzvorrichtungen gegen Frost, elektrischen Schutzvorrichtungen gegen Frost mit elektrischen Impulsen und deren Kombinationen besteht.

9. Netzwerk nach einem der Ansprüche 1 bis 8, **dadurch gekennzeichnet, dass** mindestens eine geteilte Stromversorgung (24b, 24d, 24e) einen Wechselrichter umfasst, der angepasst ist, um diesen Leistungsgleichstrom zu empfangen und um einen elektrischen Versorgungsstrom gemäß einer durch die Steuerungslogik (33) bestimmten variablen Leistung zu liefern.

10. Netzwerk nach einem der Ansprüche 1 bis 9, **dadurch gekennzeichnet, dass** mindestens eine Steuerungslogik (33), die einer geteilten Stromversorgung (24b, 24d, 24e) zugeordnet ist, angepasst ist, um einen Wert der Leistung des elektrischen Versorgungsstroms, der jeder elektrischen Schutzvorrichtung (28, 29) gegen Frost geliefert wird, zu bestimmen und anzupassen.

11. Netzwerk nach einem der Ansprüche 1 bis 10, **dadurch gekennzeichnet, dass** mindestens ein Verdichtermotor ein Elektromotor mit zwei Wicklungen ist und an zwei geteilten Stromversorgungen (24b, 24d, 24e) angeschlossen ist, wobei jede dieser beiden geteilten Stromversorgungen (24b, 24d, 24e) an die eine der beiden Wicklungen des Verdichtermotors angeschlossen ist.

12. Stromverteilungsverfahren an Bord eines Flugzeugs aus mindestens einer Vorrichtung (21) zum Erzeugen eines elektrischen Stroms, elektrischer Leistungsstrom genannt, Verfahren, bei dem:
- mindestens eine Stromversorgungsschaltung (24) mit variabler Leistung:
∘ angepasst ist, um an einen Elektromotor, Verdichtermotor genannt, zum Antreiben eines Verdichters einer Vorrichtung (25, 26, 27) für Wärmemanagement angeschlossen zu werden,
∘ einen elektrischen Leistungsstrom empfängt und einen elektrischen Versorgungsstrom des Verdichtermotors gemäß einer variablen Versorgungsleistung liefert, die durch eine Steuerungslogik (33) bestimmt wird,
- elektrischer Strom mindestens einer elektrischen Schutzvorrichtung (28, 29) gegen Frost einer Außenfläche des Flugzeugs bereitgestellt wird,
**dadurch gekennzeichnet, dass**:
- die mindestens eine elektrische Schutzvorrichtung (28, 29) gegen Frost angepasst ist, um elektrisch mit einem elektrischen Versorgungsstrom versorgt werden zu können, der von mindestens einer der Stromversorgungschaltung (24b, 24d, 24e) mit variabler Leistung, geteilte Stromversorgung genannt, eines Verdichtermotors einer Vorrichtung (25, 26, 27) für Wärmemanagement geliefert wird,
- die mindestens eine geteilte Stromversorgung (24b, 24d, 24e) anhand einer Umschaltvorrichtung (37), an die auch die mindestens eine elektrische Schutzvorrichtung (28, 29) gegen Frost angeschlossen ist, an den Verdichtermotor angeschlossen ist,
- falls Höhenkriterien des Flugzeugs erfüllt sind, die Umschaltvorrichtung (37) in einen Zustand, zweiter Zustand genannt, platziert ist, in dem die geteilte Stromversorgung (24b, 24d, 24e) elektrisch mit der mindestens einen Schutzvorrichtung (28, 29) gegen Frost verbunden ist, die an diese Umschaltvorrichtung (37) angeschlossen ist, wobei die geteilte Stromversorgung (24b, 24d, 24e) einen elektrischen Versorgungsstrom für diese elektrische Schutzvorrichtung (28, 29) gegen Frost bereitstellen kann.

13. Verfahren nach Anspruch 12, **dadurch gekennzeichnet, dass** die geteilte Stromversorgung (24b, 24d, 24e) in dem zweiten Zustand elektrisch von dem Verdichtermotor getrennt ist.

14. Verfahren nach einem der Ansprüche 12 bis 13, **dadurch gekennzeichnet, dass** die Höhenkriterien mindestens ein Kriterium umfassen, das aus der Gruppe ausgewählt wird, die aus den folgenden Kriterien besteht:
- das Flugzeug befindet sich im Flug auf einer Höhe unterhalb einer bestimmten maximalen Höhe,
- das Flugzeug befindet sich im Flug auf einer Höhe oberhalb einer bestimmten minimalen Höhe,
- das Flugzeug befindet sich im Flug auf einer Höhe unterhalb einer bestimmten maximalen Höhe und oberhalb einer bestimmten minimalen Höhe.

15. Flugzeug, **dadurch gekennzeichnet, dass** es ein elektrisches Netzwerk nach einem der Ansprüche 1 bis 11 umfasst.

## Claims

1. An aircraft electrical network comprising:
- at least one device (21) for generation of an electric current, called the electrical power current,
- at least one variable electric power supply circuit (24):
- adapted to be connected to an electric motor, called the compressor motor, to drive a compressor of a thermal management device (25, 26, 27),
- arranged to be able to receive an electric power current and to output an electric power supply current for said compressor motor with a variable power supply determined by a control logic (33)
- at least one electrical device (28, 29) providing protection against icing of an external surface of the aircraft,
**characterised in that**:
- said at least one electrical icing protection device (28, 29) is adapted so that it can be electrically powered by an electrical power supply current output by at least one of said variable electrical power supply circuits (24b, 24d, 24e), called shared electrical power supply (24b, 24d, 24e), of a compressor motor of a thermal management device (25, 26, 27),
- said at least one shared electrical power supply is adapted to be connected to said compressor motor through a switching device (37) to which said at least one electrical icing protection device (28, 29) is also connected,
- it also comprises a control unit of said switching device (37) programmed so as, if altitude criteria of the aircraft are satisfied, to place said switching device in a state called the second state, in which the shared electrical power supply (24b, 24d, 24e) is electrically connected to said at least one electrical icing protection device (28, 29) connected to this switching device (37), the shared electrical power supply (24b, 24d, 24e) then being able to supply an electrical power supply current to this electrical icing protection device (28, 29).

2. A network according to claim 1, **characterised in that** when it is in said second state, the switching device (37) is adapted to electrically disconnect the shared electrical power supply (24b, 24d, 24e) from said compressor motor.

3. A network according to claim 1 or 2, **characterised in that** the control unit is programmed to place said switching device (37):
- in a first state in which the shared electrical power supply (24b, 24d, 24e) is electrically connected to said compressor motor so as to be able to supply an electrical power supply current to it if first altitude criteria are satisfied,
- in said second state if second altitude criteria, different from said first altitude criteria, are satisfied.

4. A network according to claim 3, **characterised in that** the switching device (37) is adapted so that in said first state, the shared electrical power supply (24b, 24d, 24e) is electrically disconnected from all electrical icing protection devices (28, 29) connected to this switching device.

5. A network according to one of claims 1 to 4, **characterised in that** each electrical icing protection device (28, 29) connected to a shared electrical power supply (24b, 24d, 24e) is adapted so that it can be powered by an electrical power corresponding to the maximum electrical power of the electric power supply current of said compressor motor output by said shared electrical power supply (24b, 24d, 24e).

6. A network according to any one of claims 1 to 5, **characterised in that** at least one shared electrical power supply (24b, 24d, 24e) being a three-phase electrical power supply outputting a three-phase electrical power supply current to said compressor motor, said switching device (37) is adapted so that it can connect one phase of the three-phase electrical current output by the shared electrical power supply (24b, 24d, 24e) to an electrical icing protection device.

7. A network according to one of claims 1 to 6, **characterised in that** only the electrical power supply circuit to each electrical icing protection device (28, 29) is a shared electrical power supply.

8. A network according to one of claims 1 to 7, **characterised in that** at least one electrical icing protection device (28, 29) connected to a shared electrical power supply by a switching device (37) is chosen from the group composed of magnetic pulse electrical icing protection devices, electrothermal electrical icing protection devices, electrical pulse electrical icing protection devices and combinations thereof.

9. A network according to one of claims 1 to 8, **characterised in that** at least one shared electrical power supply (24b, 24d, 24e) comprises a UPS adapted to receive this dc power current and to output an electrical power supply current at a variable power determined by said control logic (33).

10. A network according to one of claims 1 to 9, **characterised in that** at least one control logic associated with a shared electrical power supply (24b, 24d, 24e) is adapted to determine and adjust a value of power of the electrical power supply current output to each electrical icing protection device (28, 29).

11. A network according to one of claims 1 to 10, **characterised in that** at least one compressor motor is an electric motor with two windings and is connected to two shared electrical power supplies (24b, 24d, 24e), each of these two shared electrical power supplies (24b, 24d, 24e) being connected to one of the two windings of the compressor motor.

12. A method of electrical distribution on board an aircraft starting from at least one device (21) for generation of an electrical current called the electrical power current, method in which:
- at least one variable electric power supply circuit (24):
- being adapted to be connected to an electric motor, called the compressor motor, to drive a compressor of a thermal management device (25, 26, 27),
- receives an electric power current and outputs an electric power supply current for said compressor motor with a variable power supply determined by a control logic (33)
- an electrical current is supplied to at least one electrical device (28, 29) for protection of icing of an external surface of the aircraft,
**characterised in that**:
- said at least one electrical icing protection device (28, 29) being adapted so that it can be electrically powered by an electrical power supply current output by at least one of said variable electrical power supply circuits (24b, 24d, 24e), called shared electrical power supply, of a compressor motor of a thermal management device (25, 26, 27),
- said at least one shared electrical power supply (24b, 24d, 24e) being connected to said compressor motor through a switching device (37) to which said at least one electrical icing protection device (28, 29) is also connected,
- if altitude criteria of the aircraft are satisfied, said switching device (37) is placed in a state called the second state, in which the shared electrical power supply (24b, 24d, 24e) is electrically connected to said at least one electrical icing protection device (28, 29) connected to this switching device (37), the shared electrical power supply (24b, 24d, 24e) then being able to supply an electrical power supply current to this electrical icing protection device (28, 29).

13. A method according to claim 12, **characterised in that** in said second state, the shared electrical power supply (24b, 24d, 24e) is electrically disconnected from said compressor motor.

14. A method according to claim 12 or 13, **characterised in that** said altitude criteria comprise at least one criterion chosen from the group composed of the following criteria:
- the aircraft is in flight at an altitude less than a determined maximum altitude,
- the aircraft is in flight at an altitude more than a determined minimum altitude,
- the aircraft is in flight at an altitude less than a determined maximum altitude and more than a determined minimum altitude.

15. An aircraft **characterised in that** it comprises an electrical network according to one of claims 1 to 11.
